# EUROPEAN PATENT SPECIFICATION

(11) **EP 4 263 878 B1**
(45) Date of publication and mention of the grant of the patent: **26.03.2025**
(21) Application number: 21831062.1
(22) Date of filing: 17.12.2021
(51) Int. Cl.: C21B 13/00

(54) **SMART HYDROGEN PRODUCTION FOR DRI MAKING**
INTELLIGENTE WASSERSTOFFHERSTELLUNG ZUR DRI-HERSTELLUNG
PRODUCTION INTELLIGENTE D'HYDROGÈNE POUR LA FABRICATION DE DRI

(30) Priority: 18.12.2020 LU 102327; 22.01.2021 EP 21153083
(43) Date of publication of application: 25.10.2023
(73) Proprietor: Paul Wurth S.A., 1122 Luxembourg (LU)
(72) Inventor: CASTAGNOLA, Cristiano, 16131 Genova (IT); CRAVINO, Fabio, 16011 Arenzano (IT); ILACQUA, Silvia, 16144 Genova (IT); MAGNANI, Stefano, 16149 Genova (IT); KRULL, Jan, 17019 Varazze (SV) (IT)
(74) Representative: Office Freylinger
(86) International application number: PCT/EP2021/086477
(87) International publication number: WO 2022/129515

(56) References cited:
- WO-A1-2020/245070
- CN-A- 108 374 067
- US-A1- 2020 385 827

## Description

### Background of the invention

The necessity as well as the duty to reduce global CO₂ emissions is influencing the steel industry as one of the main responsible player. The worldwide decarbonisation is pushing the steelmakers towards a transition for a more-sustainable production, based on H2 DRI process. Examples of prior art known in the field are disclosed in CN108374067A, WO2020/245070A1 and US2020/285827A1.

Hydrogen is the new key factor for CO₂ reduction at the present days and in particular for a future decarbonised steel production (green hydrogen).

Today, the main consolidated hydrogen production processes are:

### i) Steam Reforming of natural gas

This process is the most common and cheapest source of industrial hydrogen.

The natural gas is heated up to 700-1100°C in the presence of steam and a nickel catalyst. The methane molecules are broken forming carbon monoxide and hydrogen. The carbon monoxide gas passes with steam over iron oxide or other oxides and through a water gas shift reaction further hydrogen is obtained. Hydrogen produced in this way is economically attractive, but requires fossil fuels, and CO₂ capture to avoid emissions.

### ii) Electrolysis unit

Water-based electrolysis units are composed by several cells each one composed by one anode and one cathode submerged into an electrolytic solution and connected to a power source. The electricity dissociates the water inlet flow into hydrogen and oxygen.

Steam-fed electrolysis units instead use steam as input to produce hydrogen and oxygen, based on approximately the same principle as the water-based ones. Water-fed electrolysis units are expensive from CapEx and OpEx standpoint. Steam-fed electrolysis units are expensive from CapEx and OpEx standpoint; less OpEx expensive than water-fed due to higher efficiency.

### Object of the invention

The hydrogen production is thus currently associated with high costs so that the main driver is to find new and alternative and sustainable solutions to use hydrogen reducing the associated costs.

### Summary of the invention

The present invention aims to find attractive configurations to produce hydrogen in a sustainable and competitive manner, when located in an industrial environment.

The present invention discloses a plant and method of producing DRI in a hydrogen direct reduction (DR) plant.

The production of hydrogen (H₂) for the hydrogen DR plant is realized through innovative configurations, using gas shift reactor plant and/or steam-fed electrolysis unit for exploiting energy carriers already existing in a complex steel making plant (or more generally industrial site) to produce hydrogen.

Above-mentioned energy carriers are steam and/or CO bearing gas.

According to the invention, a method of producing direct reduced iron, DRI, comprises:
operating a hydrogen direct reduction, DR, plant, wherein iron ore is reduced in a shaft furnace in a hydrogen reducing atmosphere, the shaft furnace being connected with a process gas loop arranged to receive top gas from the shaft furnace, treat the top gas before heating it in a heater device, and returning to the furnace a reducing gas comprising at least 85 vol.% hydrogen, wherein a hydrogen stream (generally called make-up hydrogen) is added to the process gas loop upstream of the heater device;
operating an industrial plant generating CO-bearing gas and/or steam and/or waste heat and/or hot gases,
wherein at least part of said hydrogen stream (the make-up hydrogen stream) is produced by at least one of:
   electrolysis means configured to produce hydrogen from steam recovered from one or more components of the industrial plant and/or from steam generated using waste heat and/or hot gases emitted by the one or more components; and
   gas shift reactor means configured to convert the CO-bearing gas emitted by at least one component of the industrial plant into a hydrogen-rich gas, and preferably to remove CO2.

The 'hydrogen DR plant' may be a DR plant fed with hydrogen as reducing gas, wherein the hydrogen content of the reducing gas is between 85 and 100 vol.%, preferably above 85, or 90 vol.%, e.g. between 90 and 95 vol.%. Such hydrogen DR plant typically includes a shaft furnace and associated recycling gas loop, known as process gas loop, through which furnace top gas is treated (typically cleaned and compressed) and heated to be recycled into the furnace as reducing gas, with the above-mentioned hydrogen content. An optional fuel gas loop (using part of the recycled top gas) can be used for heating purposes in the heater equipment. Hydrogen, provided by the hydrogen stream, generally referred to as make-up hydrogen stream, is added to the process gas loop in amounts sufficient to reach the above-mentioned hydrogen concentration range, in accordance with process requirements. The role of the make-up hydrogen stream is thus to complement the amount of hydrogen in the process loop to reach the desired H₂ operating concentration in the reducing gas. The hydrogen make-up stream may typically have a H₂ content of 90 to 100 vol.%. The hydrogen DR plant may typically be a MIDREX H2 plant.

The steam may be recovered from any component of the industrial where steam may be available. Alternatively or additionally, steam may be produced through any well-known heat recovery equipment using waste heat sources present in the industrial process that otherwise would represent a heat loss. The heat recovery equipment may typically include a heat exchanger configured to bring into heat exchange relationship the hot gases / waste heat and water to generate steam. The heat recovery equipment may e.g. include a boiler where water is heated by the hot gases/waste heat.

The so-generated steam is supplied to one or more steam-fed electrolysis unit(s) that can convert the steam into hydrogen and oxygen by using electricity as input. Any appropriate electrolysis unit can be used, able to separate oxygen from the water vapour, e.g. a solid oxide electrolyzer cell (SOEC).

The CO-bearing gas represents any available industrial gas with a considerable content in carbon monoxide (e.g. at least 20 v%,or more, in some embodiments 20 to 25 v%, but other gases with higher CO concentrations can be used). In the ironmaking context, the CO-bearing gas may be any metallurgical gas present in the entire plant with a considerable content in carbon monoxide (e.g. BF gas, BOF gas, TGF gas, SAF offgas, etc), preferably with low nitrogen content. By means of equipment based on water gas shift (WGS) technology and CO₂ removal, the CO-bearing gas is converted into carbon dioxide CO₂ stream, that is separated from the rest, i.e. substantially a hydrogen-rich stream. Various technologies can be used such as the ones used in the art for pre-combustion CO2 capture. In the following, this equipment will be named gas shift reactor plant (GSRP). As is known in the art, the GSRP can include a WGS reactor combined with CO₂ capture equipment (e.g. Amine technologies). Alternatively, integrated technologies can be used, where a single reactor is configured to realize the WGS reaction and separate CO2. These technologies are known in the art and need not be further detailed.

Any conventional steam-fed electrolysis unit, any GSRP plant and any heat recovery equipment adapted for generating steam may be used in the context of the invention.

According to the present invention, the hydrogen DR plant is combined with a natural gas DR plant present in the industrial site.

The natural gas DR plant may typically be a MIDREX NG plant; alternatively it can be substituted by a MIDREX MxCol plant or NG/H2 plant.

The natural gas DR plant classically operates on reformed natural gas to produce DRI from iron ore. It comprises a further shaft furnace and a further process gas loop, the further process gas loop including heater-reformer means to generate a syngas from natural gas (and the recycled process gas). This syngas is used in the further shaft furnace as reducing gas, the typical composition of the reducing gas fed to the furnace being approximately 30-34 vol% CO, 0-4%CO₂, 50-55%H₂, 2-6%H₂O, 1-4%CH₄, 0-2%N₂.

As will be clear to those skilled in the art, the natural gas DR plant emits a top gas that is hot gases and contains CO. The conventional natural gas DR plant can be synergistically operated with the hydrogen DR plant to reduce the need on hydrogen from external sources. The same can be done for MxCol and NG/H2 plants.

In embodiments, the method includes recovering heat from the natural gas DR plant to generate steam and produce hydrogen in the electrolysis means.

This can be done at several locations in the natural gas DR plant:
- heat recovery means may be arranged on said further process gas loop of said natural gas DR plant, in particular upstream of a dedusting device, to recover heat from recycled top gas and generate steam fed to said electrolysis means
- heat recovery means may be arranged to recover heat from flue gas from the heater reformer means of said process gas loop of said natural gas DR plant, in particular before a stack of said natural gas DR plant, to generate steam;
- heat recovery means may be arranged to recover heat from hot DRI (in its forms, e.g. HDRI, HBI or CRDI) produced by said natural gas DR plant, to generate steam

Steam can be generated by recovering heat in a same manner (same location) in MxCol and NG/H2 plants, in order produce hydrogen through electrolysis.

The industrial site may generally include an electric arc furnace, EAF, in particular for melting the DRI produced in one of the DR plants or elsewhere. There, heat recovery means may advantageously be arranged to recover heat from hot gasses / waste heat emitted by the EAF to generate steam (fed to the electrolysis unit).

In embodiments, the method includes extracting CO-bearing gas from said natural gas DR plant and feeding said extracted CO-bearing gas to said gas shift reactor means to produce hydrogen. A first stream of CO-bearing gas can be branched off from the process gas loop, preferably downstream of the compressor unit. A second stream of CO-bearing gas can be branched off after the dedusting device.

In embodiments, the method may include recovering heat by means of one or more heat recovery means arranged at one or more locations in the hydrogen DR plant, and feeding the generated steam to the electrolysis means.

Heat recovery means may also be arranged on the process gas loop of the hydrogen DR plant, in particular upstream of the dedusting device, to recover heat from recycled top gas and generate steam fed to the electrolysis means.

Heat recovery means may be arranged to recover heat from hot DRI produced by the hydrogen DR plant, to generate steam fed to the electrolysis means.

In general, heat recovery means may be arranged to recover heat from one or more components within the industrial plant, in particular an EAF, from one or more DRI heat recovery systems (from any DR plant), from any of the DR plants.

According to another aspect, the invention relates to a plant comprising:
an industrial plant comprising at least one component generating CO-bearing gas, waste heat and/or steam and/or hot gases;
a hydrogen direct reduction, DR, plant comprising a shaft furnace in which iron ore is reduced in a hydrogen reducing atmosphere, and a process gas loop arranged to receive top gas from the shaft furnace, treat the top gas before heating it in a heater device, and returning to the furnace a reducing gas comprising at least 80 vol.% hydrogen, wherein a hydrogen stream is added to said process gas loop upstream of said heater device;
hydrogen production means comprising at least one of:
   i) electrolysis means configured to produce hydrogen from steam recovered from one or more components of the industrial plant and/or from steam generated by heat recovery means configured to generate steam from waste heat and/or hot gases emitted by the one or more component; and
   ii) gas shift reactor means configured to convert CO-bearing gas emitted by the industrial plant into hydrogen (preferably with contextual CO₂ removal);
wherein the hydrogen stream(s) produced by the hydrogen production means is/are fed, at least in part, to the hydrogen DR plant for addition into said process gas loop.

This plant may generally be configured to implement the above-described method.

According to another aspect, the invention relates to a method of operating a hydrogen DR plant, comprising recovering heat by means of heat recovery means arranged at one or more locations in the hydrogen DR plant, and feeding the generated steam to electrolysis means to produce hydrogen that is, in turn, fed, at least in part, to the process gas loop of the hydrogen DR plant.

Heat recovery means may be arranged on the process gas loop of the hydrogen DR plant, in particular upstream of the dedusting device, to recover heat from the recycled top gas and generate steam fed to the electrolysis means.

Heat recovery means may be arranged to recover heat from a DRI heat recovery system of the hydrogen DR plant, to generate steam fed to the electrolysis means.

According to still another aspect, the invention relates to a system for implementing the previous method (see also embodiment 4 below).

### BRIEF DESCRIPTION OF THE DRAWINGS

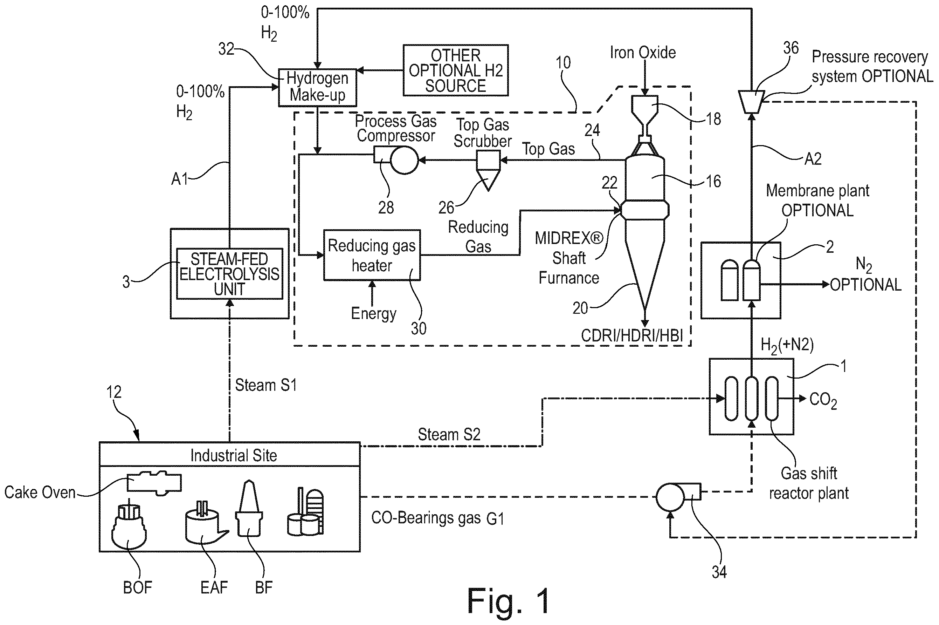

The present invention will now be described, by way of example, with reference to the accompanying drawings, in which Figures 1 to 4 relate to different embodiments of the present invention.

### DETAILED DESCRIPTION OF PREFERRED EMBODIMENTS

Industrial sites are characterized by steam and CO-bearing gas availability. In this context, the installation of H₂ direct reduction plant (e.g. MIDREX^{®} H2) results fully integrated within the existing industrial site, as per the following embodiments.

As will be seen, the present invention proposes configurations where a DR plant is fully integrated in an industrial site, in particular metallurgical plant. The invention focuses on assisting the hydrogen DR plant to produce H2 by exploiting synergies within these industrial sites.

In the following embodiments, the hydrogen operated DR plants are e.g. of the MIDREX H2^{™} type.

In some embodiments the hydrogen DR plant is installed on a site with a natural gas operated DR plant, which is e.g. of the MIDREX NG type.

### Embodiment #1 - see Innovative Scheme of Fig.1

Referring now to Fig.1, there is shown a first embodiment of the invention, in which a hydrogen DR plant 10 operating with hydrogen as reducing gas is integrated in an existing metallurgical site 12.

DR plant 10 is generally corresponds to the MIDREX H2 process. As is known, it comprises a vertical shaft 16 with a top inlet 18 and a bottom outlet 20. A charge of iron ore, in lump and/or pelletized form, is loaded into the top of the furnace and is allowed to descend, by gravity, through a reducing gas. The charge remains in the solid state during travel from inlet to outlet. The reducing gas (mainly composed of H₂) is introduced laterally in the shaft furnace- as indicated by arrow 22, at the basis of the reduction section, flowing upwards, through the ore bed. Reduction of the iron oxides occurs in the upper section of the furnace in a H₂-rich reducing atmosphere, at temperatures in the range 850 - 950°C.. The solid product, i.e. the direct reduced iron (DRI) or reduced sponge iron, is discharged after cooling or in a hot state, as indicated CDRI (Cold DRI), HDRI (Hot DRI) and HBI (Hot briquetted iron).

According to the MIDREX H2 process, almost pure hydrogen is used as the reducing gas for DR furnace.

The ideal hydrogen content of the reducing gas is 100%. In practice, the H2 content may vary between 85 and 100 vol.%, with the balance composed by N2, CO, CO2, H2O and CH4. These constituents result from the purity of the H2 make-up, and from eventual addition of natural gas as known in the art.

As will be known to those skilled in the art, MIDREX H2 is similar to the standard MIDREX^{®} natural gas process except that the H2 input gas is generated external to the process. Thus, there is no reforming process to be executed, but only heat transfer, to heat the gas to the required temperature.

Because H₂ is converted to H₂O and condensed in the top gas scrubber, no CO₂ removal system is necessary (unless particularly high NG addition mentioned above).

Referring to the figure, the DR furnace 16 is connect to a top gas recycling loop (or process gas loop) 24, comprising a scrubber 26, compressor unit 28 and heater device 30. The top gas exiting the DR furnace 16 thus flows through the scrubber 26, where dust is removed and water condensed, and further to a compressor device 28. The hydrogen quantity in the process gas loop 24 is adjusted by adding a hydrogen stream referred to as "hydrogen make-up", depending on the process requirements. The H₂ content in the hydrogen make-up stream is preferably 90 to 100%. The hydrogen make-up stream -hydrogen source is indicated at box 32 'hydrogen make up'- is injected into the recycling loop 24 between compressor unit 28 and heater device 30. The gas is then heated up to the required temperature range in heater device 30, whereby the reducing gas is ready for introduction into the furnace 16. Heating energy may be provided to the heater device 30 by way of environmentally friendly heat sources such as waste heat, electricity, hydrogen, biomass, and/or natural gas is required as fuel for the heater device.

As will be understood from the present description, most of the hydrogen stream required for the reduction process can be produced on site, arriving at node 32. Optionally, H2 can be added from an external source, although this should normally only represent a minor portion of the hydrogen stream added to the process gas loop.

Steam S1 is recovered from the industrial site 12 where it may be available, or may be produced by means of standard heat recovery equipment. For example, the waste heat is directed to a heat exchanger to produce steam from water (e.g. boiler type steam production).

The produced and/or recovered steam can be used to feed a steam-fed electrolysis unit 3 and produce a hydrogen stream A1 directed to the H₂ DR plant.

Another stream of steam S2 recovered from or generated by the industrial plant 12 can feed a water gas shift reactor plant 1 jointly with the CO-bearing gas G1 coming from the gases generated by different processes present in the plant 12.

Gas shift reactor plant, GSRP, 1 is designed to implement the water-gas shift reaction, which describes the reaction of carbon monoxide and water vapor to form carbon dioxide and hydrogen:

CO + H2O 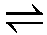

CO2 + H2

GSRP 1 can be of any appropriate technology. It is thus fed with two streams (steam S2 and CO-bearing gas G1) from the industrial site 12, to produce two main streams comprising on the one hand carbon dioxide and on other hand a hydrogen-rich stream, noted stream A2. It will be appreciated here that GSRP 1 is further configured to separate CO₂, which can thus be removed from the process. The GSRP plant 1 can be conventional, based on any appropriate technology.

The hydrogen-rich stream flowing out of GSRP 1 can be optionally passed through a nitrogen removing unit 2 (e.g. using membranes or pressure swing adsorption) for separating N2 from the gaseous flow.

The so-produced hydrogen stream A2 is fed to node 32 where it is mixed with the first stream A1 and possibly with another H2 stream coming from an external source. The thus combined hydrogen stream is introduced into the top gas recycling loop 24.

The CO-bearing gas stream G1 may be compressed upstream of GSRP 1 by a compressor unit 34. A pressure recovery system (turbine) 36 can be arranged downstream of WGS reactor plant 1 to recover energy from the hydrogen A2 flow and generate power to supply compressor 34.

With this integrated solution most of the hydrogen required to the H₂ reduction process can be satisfied from the hydrogen self-produced within the integrated plant.

A skilled person of the art will recognize the potential of heat recovery of standard steelmaking plants based on BF-BOF route (i.e. steam produced via heat recovery in sinter coolers, via Coke dry quenching, etc). Similarly those skilled in the art will easily determine the amounts and types of CO-bearing gases available in a standard steelmaking plant based on BF-BOF route (i.e. BF gas, BOF Gas, SAF offgas, etc).

A particularly interesting configuration is the depicted DRI-EAF plant. The conventional practice of DRI-EAF plants is limited on heat recovery; CO-bearing gases are neither commonly available nor profitably exploited.

The present invention thus exploits, in one embodiment, waste heat and CO-bearing gas from the EAF to H2 via electrolysis and water gas shift reactions. This permits diminishing the dependence on external H2 sources for operating the DR plant.

It may be noted that the configuration of Fig.1 allows selective operation based on steam or CO-bearing gas. That is, one can operate the DR plant with H2 produced from steam generated by heat recovery from the industrial site (ie via electrolysis), or from H2 produced from the CO bearing has by the GSRP plant, or both.

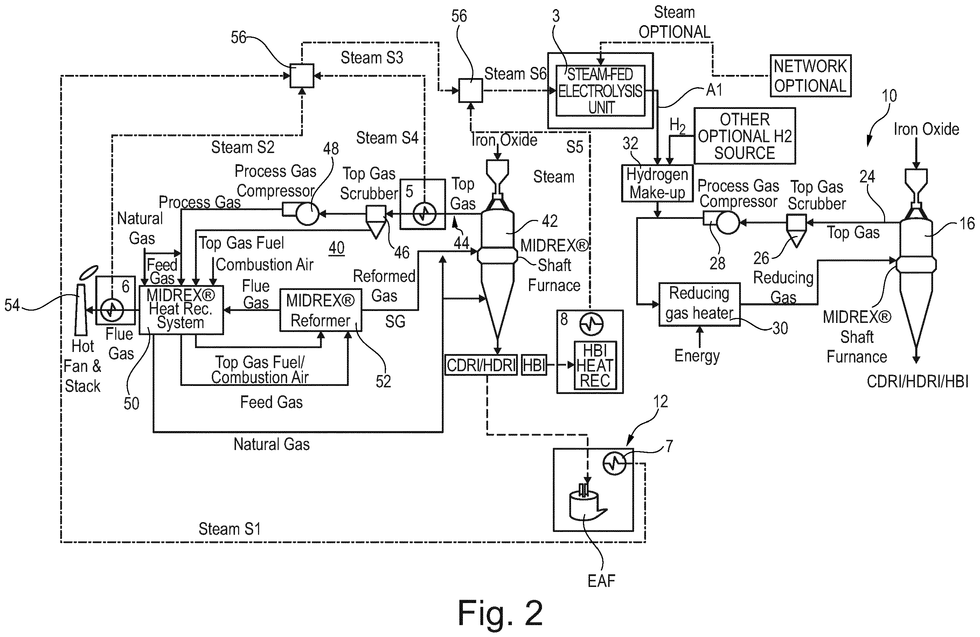

**Embodiment #2** - Scheme of Figure 2Embodiment 2 is a detailed case of embodiment 1 when the H₂ Midrex plant 10 is installed within an existing Midrex NG plant40.

As known to those skilled in the art, the Midrex NG plant40 conventionally includes a shaft furnace42 and a top gas recycling loop 44 with a top gas scrubber 46, process gas compressor 48, a heat recovery system 50 and a reformer 52. The arrangement of the heat recovery system 50 and a reformer 52 shown in Fig.2 is conventional for a MIDREX NG installation, where syngas (mainly CO and H2) is formed in the reformer 52 by reforming of natural gas. CO-containing recycled top gas combined with natural gas, forming the reducing feed gas for the furnace, are preheated in the heat recovery system 50 and then react in the reformer 52 to generate the syngas stream SG. Natural gas, part of the top gas and air are burnt in the reformer 52 to sustain the reforming reactions and the flues are sent to the heat recovery system 50 and further downstream to the environment (stack 54).

It will be appreciated that a steel making plant composed of NG Midrex plant 40 and electric arc furnace 12 has different sources of waste heat that can be exploited to produce steam to feed steam-fed electrolysis unit 3 and produce hydrogen indicated as Stream A1 to be used in the MIDREX H2 plant 10.

Steam generation is done by means of heat recovery / steam generation equipment (e.g. boiler type) positioned at one or more of the following locations:
heat recovery / steam generation unit 5 at the top gas outlet (Item 5) on the recycling loop 44, generating steam stream S4;
heat recovery / steam generation unit 6 at the flue gas before the stack 54 inlet, generating steam stream S2;
heat recovery / steam generation unit 7 at the EAF site 12, generating steam stream S1; and
heat recovery / steam generation unit 8 arranged to recover heat from a HBI cooling system, generating steam stream S5. Here heat is extracted from the HBI discharged from the furnace 42, but could also be obtained by the heat removed from the CDRI cooling system.

The various steam streams S1 to S5 are combined by means of mixing nodes 56, 56 to form a cumulative stream S6 fed to the electrolysis unit 3, where a hydrogen stream A1 is produced and fed, via node 32 (hydrogen make-up), to the recycling loop 24 of the hydrogen operated DR plant 10.

The total steam produced by all of heat recovery units integrate and decrease the required hydrogen make up from external sources in varying proportions according the sizes of each Midrex plant unit.

As reference considering 1 MTPY NG Midrex, savings of about 60-70 % of the total metallurgical hydrogen for 1 MTPY H₂ Midrex plants is possible.

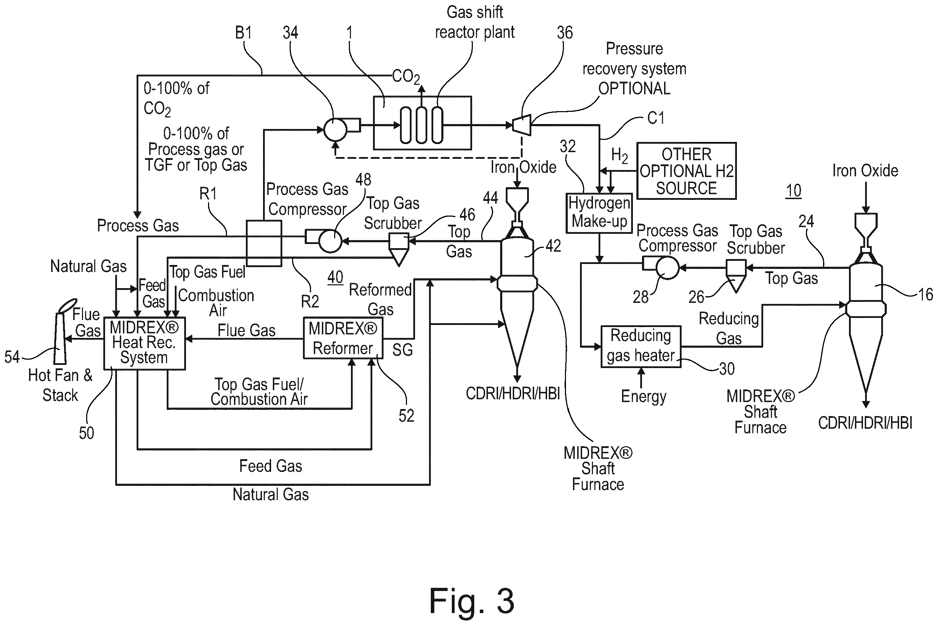

### Embodiment #3 - Scheme of Fig.3

Embodiment 3 represents an additional detailed case of embodiment1, alternative (or cumulative) to embodiment 2.

Here again a hydrogen DR plant 10 is coupled with a NG DR plant 40.

Part of the CO bearing gas generated by the NG reduction process, namely here top gas fuel - stream R2 - and/or process gas - stream R1, is taken from the NG recycling loop 44 and directed to the GSRP 1 in order to produce a hydrogen stream C1 for the H₂ reduction process. The CO₂ stream B1 generated by the GSRP 1 is re-introduced, at least in part, in the NG reduction process in order to meet a predetermined ratio of CO₂ in the reforming process.

Hydrogen stream C1 is introduced, optionally combined with hydrogen from another source, into the top gas recycling loop 24 of the hydrogen DR plant 10, upstream of heater 30.

As in Fig.1, a compressor 34 is arranged before GSRP 1 to compressor the CO-bearing streams R1 and R2. Energy can be recovered by means of an optional pressure recovery turbine 36.

Table 1 below shows typical gas compositions for Top gas fuel (Stream R2) and Process gas (Stream R1).

**Table 1**

| %vol | Top gas fuel (R2) | Process gas (R1) |
|---|---|---|
| CO | 23,49 | 19,76 |
| CO2 | 20,57 | 17,39 |
| H2 | 46,54 | 39,21 |
| H2O | 2,91 | 15,54 |
| N2 | 2,40 | 2,26 |
| CH4 | 4,09 | 5,54 |
| Temp (°C) | 35 | 172 |
| Press (barg) | 0,9 | 2,66 |

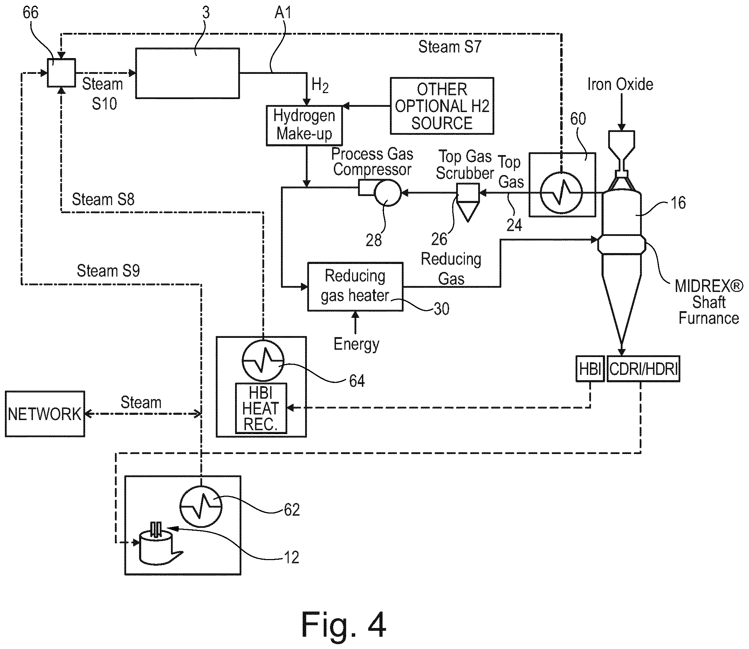

### Embodiment #4 -Scheme of Fig.4

This last embodiment represents an add-on possibility that can be implemented additionally to previous embodiments.

A steel making plant comprising a H₂ Midrex plant and electric arc furnace (EAF) can self-produce part of the hydrogen required by the reduction process in the hydrogen DR plant 10 according the configuration shown in Fig.4. In this embodiment, different heat sources are exploited to produce the steam by means of heat recovery / steam generation equipment (e.g. boiler type) positioned at one or more of the following locations:
heat recovery / steam generation unit 60 at the top gas outlet from furnace 16 before the inlet in the scrubber 26, generating steam stream S7;
heat recovery / steam generation unit 62 at the EAF site, generating steam stream S9;
heat recovery / steam generation unit 64 combined with a HBI cooling system, to produce a steam stream S8 (could also be obtained by the heat removed from the CDRI cooling system).

Streams S7, S8 and S9 (possibly with an additional steam stream from the industrial site network) are combined at mixing node 66, the resulting steam stream S10 is fed to a steam-fed electrolysis unit 3 to produce a hydrogen stream A1.

The heat recovery options (10, 11 and/or 12) and electrolysis unit can be easily integrated in the embodiment of Fig.3

### Benefits

### • OpEx/CapEx benefits

Conventional operation of H₂ DR plants have today the disadvantage of high OPEX (and CAPEX) related to the hydrogen production or purchase from sources external to the plant.

The present invention provides a technically flexible solution since it can bring advantages both for today and for tomorrow, where market conditions will change.

If today steam-fed electrolysis unit could not be totally cost-effective due to the current price of the electricity, it is possible to minimize or turn off its contribution to the process emphasizing the water gas shift technology, that today appears as the most attractive one to produce hydrogen with the lowest Opex in comparison with the industrial hydrogen purchased by the market and the hydrogen production based on electrolysis.

In the next future, the electricity price will decrease. The solution with steam-fed electrolysis will become the most convenient way to produce hydrogen. The flexibility of the present embodiments gives the chance to exploit the two different technologies according to the most convenient market condition.

Therefore, the mentioned innovative plant configurations can reduce the costs associated to the hydrogen utilization both today and tomorrow considering that the self-produced hydrogen can satisfy the process demand in varying proportion according to the process characteristics and to the size of the plant.

### • Environmental benefits

The proposed solutions are based on CO-bearing gas and/or steam-fed electrolysis.

In the case of the use of steam-fed electrolysis, the produced hydrogen can be claimed as CO2 free (provided electricity is produced accordingly).

In the case of use of CO-bearing gas, the hydrogen can at least be claimed as CO₂ neutral (since no additional CO₂ is emitted, nor additional fossil fuel is required - i.e. comparison to steam methane reforming).

## Claims

1. A method of producing direct reduced iron, DRI, comprising:
operating a hydrogen direct reduction, DR, plant, wherein iron ore is reduced in a shaft furnace in a hydrogen rich atmosphere, the shaft furnace being connected with a process gas loop arranged to receive top gas from the shaft furnace, treat the top gas before heating it in a heater device, and returning to the furnace a reducing gas comprising at least 85 vol.% hydrogen, wherein a hydrogen stream is added to said process gas loop upstream of said heater device;
operating an industrial plant generating CO-bearing gas and/or waste heat and/or hot gases, wherein the industrial plant includes a natural gas DR plant operating on reformed natural gas to produce DRI from iron ore, said natural gas DR plant including a further shaft furnace and a further process gas loop, said further process gas loop including heater-reformer means to generate a syngas from natural gas, to be fed to the further shaft furnace as reducing gas;
wherein at least part of said hydrogen stream is produced by at least one of:
electrolysis means configured to produce hydrogen from steam recovered from one or more components of the industrial plant and/or from steam generated using waste heat and/or hot gases emitted by the one or more components; and
gas shift reactor means configured to convert CO-bearing gas emitted by at least one component of the industrial plant into hydrogen and to remove CO₂.

2. The method as claimed in claim 1, including recovering heat from the natural gas DR plant to generate steam and produce hydrogen in said electrolysis means.

3. The method as claimed in claim 2, wherein heat recovery means are arranged on said further process gas loop of said natural gas DR plant, in particular to be contacted with top gas after exit from the shaft furnace, to recover heat from recycled top gas and generate steam that is fed to said electrolysis means.

4. The method as claimed in claim 2 or 3, wherein heat recovery means are arranged to recover heat from flue gas from the heater reformer means of said process gas loop of said natural gas DR plant, in particular before a stack of said natural gas DR plant, to generate steam.

5. The method as claimed in claim 2, 3 or 4, wherein heat recovery means are arranged to recover heat from hot DRI produced by said natural gas DR plant, to generate steam.

6. The method as claimed in any one of the preceding claims, wherein the industrial plant includes an EAF and heat recovery means are arranged to recover heat from waste heat and/or hot gasses emitted by said EAF to generate steam, and possibly from downstream equipment.

7. The method as claimed in any one of the claims 1 to 6, comprising
extracting CO-bearing gas from said natural gas DR plant and feeding said extracted CO-bearing gas to said gas shift reactor means,
preferably a first CO-bearing gas stream is extracted from the process gas loop downstream of the compressor means and/or a second CO-bearing gas stream is extracted after the dedusting device in the process gas loop.

8. The method according to any one of the preceding claims, comprising recovering heat by means of heat recovery means arranged at one or more locations in the hydrogen DR plant, and feeding the generated steam to the electrolysis means.

9. The method according to claim 8, wherein heat recovery means are arranged on said further process gas loop of said hydrogen DR plant, in particular to be contacted with top gas after exit from said further shaft furnace, to recover heat from recycled top gas and generate steam fed to said electrolysis means.

10. The method according to claim 8 or 9, wherein heat recovery means are arranged to recover heat from hot DRI produced by said hydrogen DR plant, to generate steam fed to said electrolysis means.

11. The method according to any one of the preceding claims, wherein the industrial plant comprises one or more of a sinter plant, a coke oven plant, an Electric Arc Furnace, a Blast Furnace, a Submerged arc furnace (SAF), continuous casters, rolling mills, Basic Oxygen Furnace, etc.

12. The method according to any one of the preceding claims, wherein said process gas loop includes gas cleaning means and compressor means upstream of said heater device, said hydrogen stream addition being done between said compressor means and heater device.

13. The method of claims 1 to 12, wherein said hydrogen stream added to said process gas loop of said hydrogen DR plant contains 90 to 100 vol.% H₂ : and optionally hydrogen from a further source is fed to the hydrogen DR plant.

14. A plant comprising:
an industrial plant comprising at least one component generating CO-bearing gas, waste heat and/or steam and/or hot gases;
a hydrogen direct reduction, DR, plant comprising a shaft furnace in which iron ore is reduced in a hydrogen reducing atmosphere, and a process gas loop arranged to receive top gas from the shaft furnace, treat the top gas before heating it in a heater device, and returning to the furnace a reducing gas comprising at least 80 vol.% hydrogen, wherein a hydrogen stream is added to said process gas loop upstream of said heater device;
hydrogen production means comprising at least one of:
electrolysis means configured to produce hydrogen from steam recovered from one or more components of the industrial plant and/or from steam generated by heat recovery means configured to generate steam from waste heat and/or hot gases emitted by the one or more component;
gas shift reactor means configured to convert CO-bearing gas emitted by the industrial plant into hydrogen and remove CO₂;
wherein the hydrogen stream(s) produced by the hydrogen production means is/are fed, at least in part, to the hydrogen DR plant for addition into said process gas loop,
wherein the industrial plant includes a natural gas DR plant operating on reformed natural gas to produce DRI from iron ore, said natural gas DR plant including a further shaft furnace and a further process gas loop, said further process gas loop including heater-reformer means to generate a syngas from natural gas, to be fed to the further shaft furnace as reducing gas.

## Patentansprüche

1. Verfahren zum Herstellen von Schwammeisen (Direct Reduced Iron, DRI), umfassend:
Betreiben einer Wasserstoff-Direktreduktionsanlage, DR-Anlage, wobei Eisenerz in einem Schachtofen in einer wasserstoffreichen Atmosphäre reduziert wird, wobei der Schachtofen an einen Prozessgaskreis angeschlossen wird, der so angeordnet ist, dass er Gichtgas von dem Schachtofen empfängt, das Gichtgas behandelt, bevor es in einer Heizungsvorrichtung erhitzt wird, und Rückführen eines Reduktionsgases in den Ofen, welches mindestens 85 Vol.-% Wasserstoff umfasst, wobei dem Prozessgaskreis stromaufwärts der Heizungsvorrichtung ein Wasserstoffstrom zugegeben wird;
Betreiben einer Industrieanlage, die CO-führendes Gas und/oder Abwärme und/oder heiße Gase erzeugt, wobei die Industrieanlage eine Erdgas-DR-Anlage einschließt, die mit reformiertem Erdgas betrieben wird, um **DRI** aus Eisenerz herzustellen, wobei die Erdgas-DR-Anlage einen weiteren Schachtofen und einen weiteren Prozessgaskreis einschließt, wobei der weitere Prozessgaskreis Heizungsreformermittel einschließt, um ein Synthesegas aus Erdgas zu erzeugen, das dem weiteren Schachtofen als Reduktionsgas zugeführt werden soll;
wobei zumindest ein Teil des Wasserstoffstroms von mindestens einem der Folgenden hergestellt wird:
Elektrolysemitteln, die dafür konfiguriert sind, Wasserstoff aus Dampf herzustellen, der aus einer oder mehreren Komponenten der Industrieanlage wiedergewonnen wurde, und/oder aus Dampf herzustellen, der unter Verwendung von Abwärme und/oder heißen Gasen, die von der einen oder den mehreren Komponenten ausgestoßen werden, erzeugt wird; und
Gaskonvertierungsmitteln, die dafür konfiguriert sind, CO-führendes Gas, das von mindestens einer Komponente der Industrieanlage ausgestoßen wird, in Wasserstoff umzuwandeln und CO₂ zu entfernen.

2. Verfahren nach Anspruch 1, einschließend das Wiedergewinnen von Wärme aus der Erdgas-DR-Anlage, um Dampf zu erzeugen und Wasserstoff in den Elektrolysemitteln herzustellen.

3. Verfahren nach Anspruch 2, wobei Wärmerückgewinnungsmittel in dem weiteren Prozessgaskreis der Erdgas-DR-Anlage angeordnet sind, insbesondere um mit Gichtgas nach dem Austreten aus dem Schachtofen in Kontakt gebracht zu werden, um Wärme aus recyceltem Gichtgas rückzugewinnen und Dampf zu erzeugen, der den Elektrolysemitteln zugeführt wird.

4. Verfahren nach Anspruch 2 oder 3, wobei Wärmerückgewinnungsmittel angeordnet sind, um Wärme aus Rauchgas von den Heizungsreformermitteln des Prozessgaskreises der Erdgas-DR-Anlage rückzugewinnen, insbesondere vor einem Schacht der Erdgas-DR-Anlage, um Dampf zu erzeugen.

5. Verfahren nach Anspruch 2, 3 oder 4, wobei Wärmerückgewinnungsmittel angeordnet sind, um Wärme von heißem DRI rückzugewinnen, das von der Erdgas-DR-Anlage hergestellt worden ist, um Dampf zu erzeugen.

6. Verfahren nach einem der vorhergehenden Ansprüche, wobei die Industrieanlage einen EAF einschließt und Wärmerückgewinnungsmittel angeordnet sind, um Wärme aus Abwärme und/oder aus den vom EAF ausgestoßenen heißen Gasen rückzugewinnen, um Dampf zu erzeugen, und gegebenenfalls aus stromabwärtiger Ausrüstung.

7. Verfahren nach einem der Ansprüche 1 bis 6, umfassend das Extrahieren von CO-führendem Gas von der Erdgas-DR-Anlage und Zuführen des extrahierten CO-führenden Gases zu den Gaskonvertierungsmitteln, vorzugsweise wird ein erster CO-führender Gasstrom von dem Prozessgaskreis stromabwärts der Kompressormittel und/oder ein zweiter CO-führender Gasstrom nach der Entstaubungsvorrichtung in dem Prozessgaskreis extrahiert.

8. Verfahren nach einem der vorhergehenden Ansprüche, umfassend das Rückgewinnen von Wärme mittels Wärmerückgewinnungsmitteln, die an einer oder mehreren Stellen in der Wasserstoff-DR-Anlage angeordnet sind, und das Zuführen des erzeugten Dampfes zu den Elektrolysemitteln.

9. Verfahren nach Anspruch 8, wobei Wärmerückgewinnungsmittel in dem weiteren Prozessgaskreis der Wasserstoff-DR-Anlage angeordnet sind, insbesondere um mit Gichtgas nach dem Austreten aus dem weiteren Schachtofen in Kontakt gebracht zu werden, um Wärme aus recyceltem Gichtgas rückzugewinnen und Dampf zu erzeugen, der den Elektrolysemitteln zugeführt wird.

10. Verfahren nach Anspruch 8 oder 9, wobei Wärmerückgewinnungsmittel angeordnet sind, um Wärme von heißem DRI rückzugewinnen, das von der Wasserstoff-DR-Anlage hergestellt worden ist, um Dampf zu erzeugen, der den Elektrolysemitteln zugeführt wird.

11. Verfahren nach einem der vorhergehenden Ansprüche, wobei die Industrieanlage eine oder mehrere von einer Sinteranlage, einer Koksofenanlage, einem Lichtbogenofen, einem Hochofen, einem Elektroreduktionsofen (Submerged Arc Furnace, SAF), kontinuierlichen Gießapparaten, Walzwerken, einem Konverter mit Sauerstofflanze usw. umfasst.

12. Verfahren nach einem der vorhergehenden Ansprüche, wobei der Prozessgaskreis Gasreinigungsmittel und Kompressormittel stromaufwärts der Heizungsvorrichtung einschließt, wobei die Wasserstoffstromzugabe zwischen den Kompressormitteln und der Heizungsvorrichtung erfolgt.

13. Verfahren nach den Ansprüchen 1 bis 12, wobei der dem Prozessgaskreis der Wasserstoff-DR-Anlage zugefügte Wasserstoffstrom 90 bis 100 Vol.-% H₂ enthält und gegebenenfalls Wasserstoff von einer weiteren Quelle der Wasserstoff-DR-Anlage zugeführt wird.

14. Anlage, umfassend:
eine Industrieanlage, umfassend mindestens eine Komponente, die CO-führendes Gas, Abwärme und/oder Dampf und/oder heiße Gase erzeugt;
eine Wasserstoffdirektreduktionsanlage, DR-Anlage, umfassend einen Schachtofen, in dem Eisenerz in einer Wasserstoff reduzierenden Atmosphäre reduziert wird, und einen Prozessgaskreis, der angeordnet ist, um Gichtgas von dem Schachtofen zu empfangen, das Gichtgas zu behandeln, bevor es in einer Heizungsvorrichtung erhitzt wird, und Rückführen in den Ofen eines Reduktionsgases, welches mindestens 80 Vol.-% Wasserstoff umfasst, wobei ein Wasserstoffstrom dem Prozessgaskreis stromaufwärts der Heizungsvorrichtung zugegeben wird;
Wasserstoffherstellungsmittel, umfassend mindestens eines der Folgenden:
- Elektrolysemittel, die dafür konfiguriert sind, Wasserstoff aus Dampf herzustellen, der aus einer oder mehreren Komponenten der Industrieanlage wiedergewonnen wurde, und/oder aus Dampf herzustellen, der durch Wärmerückgewinnungsmittel erzeugt wird, die dafür konfiguriert sind, Dampf aus Abwärme und/oder heißen Gasen zu erzeugen, die von der einen oder den mehreren Komponenten ausgestoßen werden;
- Gaskonvertierungsmittel, die dafür konfiguriert sind, CO-führendes Gas, das von der Industrieanlage ausgestoßen wird, in Wasserstoff umzuwandeln und CO₂ zu entfernen;
wobei der Wasserstoffstrom (die Wasserstoffströme), der (die) von den Wasserstoffherstellungsmitteln erzeugt wird (werden), zumindest teilweise der Wasserstoff-DR-Anlage zum Hinzufügen in den Prozessgaskreis zugeführt wird (werden),
wobei die Industrieanlage eine Erdgas-DR-Anlage einschließt, die mit reformiertem Erdgas betrieben wird, um DRI aus Eisenerz zu erzeugen, wobei die Erdgas-DR-Anlage einen weiteren Schachtofen und einen weiteren Prozessgaskreis einschließt, wobei der weitere Prozessgaskreis Heizungsreformermittel einschließt, um ein Synthesegas aus Erdgas zu erzeugen, das dem weiteren Schachtofen als Reduktionsgas zugeführt werden soll.

## Revendications

1. Procédé de production de fer de réduction directe, DRI, comprenant :
l'exploitation d'une installation de réduction directe, DR, à l'hydrogène dans laquelle du minerai de fer est réduit dans un four à cuve dans une atmosphère riche en hydrogène, le four à cuve étant relié à une boucle de gaz de traitement agencée pour recevoir le gaz de tête du four à cuve, traiter le gaz de tête avant de le chauffer dans un dispositif de chauffage, et renvoyer au four un gaz réducteur comprenant au moins 85 % en volume d'hydrogène, dans lequel un flux d'hydrogène est ajouté à ladite boucle de gaz de traitement en amont dudit dispositif de chauffage ;
l'exploitation d'une installation industrielle générant du gaz porteur de CO et/ou de la chaleur résiduelle et/ou des gaz chauds, dans laquelle l'installation industrielle comprend une installation DR au gaz naturel fonctionnant au gaz naturel reformé pour produire du DRI à partir de minerai de fer, ladite installation DR au gaz naturel comprenant un autre four à cuve et une autre boucle de gaz de traitement, ladite autre boucle de gaz de traitement comprenant des moyens réchauffeurs-reformeurs pour générer un gaz de synthèse à partir du gaz naturel, à alimenter l'autre four à cuve en tant que gaz réducteur ;
dans lequel au moins une partie dudit flux d'hydrogène est produite par au moins l'un de :
des moyens d'électrolyse conçus pour produire de l'hydrogène à partir de vapeur récupérée d'un ou plusieurs composants de l'installation industrielle et/ou à partir de vapeur générée en utilisant la chaleur résiduelle et/ou les gaz chauds émis par le ou les composants ; et
des moyens de réacteur de conversion de gaz conçus pour convertir le gaz porteur de CO émis par au moins un composant de l'installation industrielle en hydrogène et pour éliminer le CO₂.

2. Procédé selon la revendication 1, comprenant la récupération de chaleur à partir de l'installation DR au gaz naturel pour générer de la vapeur et produire de l'hydrogène dans lesdits moyens d'électrolyse.

3. Procédé selon la revendication 2, dans lequel des moyens de récupération de chaleur sont disposés sur ladite autre boucle de gaz de traitement de ladite installation DR au gaz naturel, en particulier pour être mis en contact avec le gaz de tête après la sortie du four à cuve, afin de récupérer la chaleur du gaz de tête recyclé et de générer de la vapeur qui est alimentée auxdits moyens d'électrolyse.

4. Procédé selon la revendication 2 ou 3, dans lequel des moyens de récupération de chaleur sont agencés pour récupérer la chaleur des gaz de combustion provenant des moyens réchauffeurs-reformeurs de ladite boucle de gaz de traitement de ladite installation DR au gaz naturel, en particulier avant une cheminée de ladite installation DR au gaz naturel, afin de générer de la vapeur.

5. Procédé selon la revendication 2, 3 ou 4, dans lequel des moyens de récupération de chaleur sont agencés pour récupérer la chaleur du DRI chaud produit par ladite installation DR au gaz naturel, afin de générer de la vapeur.

6. Procédé selon l'une quelconque des revendications précédentes, dans lequel l'installation industrielle comprend un EAF et des moyens de récupération de chaleur sont agencés pour récupérer de la chaleur à partir de la chaleur résiduelle et/ou des gaz chauds émis par ledit EAF afin de générer de la vapeur, et éventuellement à partir d'équipement en aval.

7. Procédé selon l'une quelconque des revendications 1 à 6, comprenant
l'extraction de gaz porteur de CO de ladite installation DR au gaz naturel et l'alimentation dudit gaz porteur de CO extrait auxdits moyens de réacteur de conversion de gaz,
de préférence un premier flux de gaz porteur de CO est extrait de la boucle de gaz de traitement en aval du moyen compresseur et/ou un deuxième flux de gaz porteur de CO est extrait après le dispositif de dépoussiérage dans la boucle de gaz de traitement.

8. Procédé selon l'une quelconque des revendications précédentes, comprenant la récupération de chaleur au moyen de moyens de récupération de chaleur agencés à un ou plusieurs emplacements dans l'installation DR à hydrogène, et l'alimentation de la vapeur générée aux moyens d'électrolyse.

9. Procédé selon la revendication 8, dans lequel des moyens de récupération de chaleur sont agencés sur ladite autre boucle de gaz de traitement de ladite installation DR à hydrogène, en particulier pour être mis en contact avec le gaz de tête après la sortie dudit autre four à cuve, afin de récupérer la chaleur du gaz de tête recyclé et de générer de la vapeur alimentée auxdits moyens d'électrolyse.

10. Procédé selon la revendication 8 ou 9, dans lequel des moyens de récupération de chaleur sont agencés pour récupérer la chaleur du DRI chaud produit par ladite installation DR à hydrogène, afin de générer de la vapeur alimentée auxdits moyens d'électrolyse.

11. Procédé selon l'une quelconque des revendications précédentes, dans lequel l'installation industrielle comprend un ou plusieurs éléments parmi une installation de frittage, une installation de four à coke, un four à arc électrique, un haut fourneau, un four à arc immergé (SAF), des machines de coulée continue, des laminoirs, un convertisseur à oxygène, etc.

12. Procédé selon l'une quelconque des revendications précédentes, dans lequel ladite boucle de gaz de traitement comprend des moyens de nettoyage de gaz et des moyens compresseurs en amont dudit dispositif de chauffage, ledit ajout de flux d'hydrogène étant effectué entre lesdits moyens compresseurs et ledit dispositif de chauffage.

13. Procédé selon les revendications 1 à 12, dans lequel ledit flux d'hydrogène ajouté à ladite boucle de gaz de traitement de ladite installation DR à hydrogène contient 90 à 100 % en volume de H₂: et éventuellement de l'hydrogène provenant d'une autre source est alimenté à l'installation DR à hydrogène.

14. Installation comprenant :
une installation industrielle comprenant au moins un composant générant du gaz porteur de CO, de la chaleur résiduelle et/ou de la vapeur et/ou des gaz chauds ;
une installation de réduction directe, DR, à l'hydrogène comprenant un four à cuve dans lequel du minerai de fer est réduit dans une atmosphère réductrice d'hydrogène, et une boucle de gaz de traitement agencée pour recevoir le gaz de tête du four à cuve, traiter le gaz de tête avant de le chauffer dans un dispositif de chauffage, et de renvoyer au four un gaz réducteur comprenant au moins 80 % en volume d'hydrogène, dans lequel un flux d'hydrogène est ajouté à ladite boucle de gaz de traitement en amont dudit dispositif de chauffage ;
des moyens de production d'hydrogène comprenant au moins l'un de :
- des moyens d'électrolyse conçus pour produire de l'hydrogène à partir de la vapeur récupérée d'un ou plusieurs composants de l'installation industrielle et/ou de la vapeur générée par des moyens de récupération de chaleur conçus pour générer de la vapeur à partir de la chaleur perdue et/ou des gaz chauds émis par le ou les composants ;
- des moyens de réacteur de conversion de gaz conçus pour convertir le gaz porteur de CO émis par l'installation industrielle en hydrogène et éliminer le CO₂ ;
dans laquelle le(s) flux d'hydrogène produit(s) par les moyens de production d'hydrogène est/sont introduit(s), au moins en partie, dans l'installation DR à hydrogène pour ajout dans ladite boucle de gaz de traitement,
dans laquelle l'installation industrielle comprend une installation DR au gaz naturel fonctionnant au gaz naturel reformé afin de produire du DRI à partir de minerai de fer, ladite installation DR au gaz naturel comprenant un autre four à cuve et une autre boucle de gaz de traitement, ladite autre boucle de gaz de traitement comprenant des moyens réchauffeurs-reformeurs pour générer un gaz de synthèse à partir de gaz naturel, à alimenter à l'autre four à cuve en tant que gaz réducteur.
